Europäisches Patentamt

European Patent Office

Office européen des brevets

(19)

(11) **EP 1 300 181 A2**

(12) **EUROPEAN PATENT APPLICATION**

(43) Date of publication:
**09.04.2003 Bulletin 2003/15**

(51) Int Cl.⁷: **A63F 13/10**, G06T 15/00

(21) Application number: **02010913.8**

(22) Date of filing: **16.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.10.2001 JP 2001306443**

(71) Applicant: **Konami Corporation**
**Chiyoda-ku, Tokyo 100-6330 (JP)**

(72) Inventor: **Kanno, Munetaka**
**4-1-23, Shiba, Minato-ku, Tokyo 108-0014 (JP)**

(74) Representative: **Selting, Günther, Dipl.-Ing. et al**
**Patentanwälte**
**von Kreisler, Selting, Werner**
**Postfach 10 22 41**
**50462 Köln (DE)**

(54) **Game device, game control method and program**

(57)    A game device, which enables a player to play a game comfortably without feeling a stress or an unpleasant sensation, is provided.

Since a ratio of drawing elements increases at an increase rate larger than a prescribed increase rate according to an input operation, an image can be shown more quickly compared with a case without the input operation. In other words, the image is shown after a prescribed time when no input operation is performed, and the image can be shown earlier than the prescribed time when the input operation is performed, so that a time until the image is shown can be reduced as compared with the case where no input operation is performed. Thus, the player does not feel a stress when the image is shown and can play the game comfortably. Since the display of the image can be accelerated according to the input operation, a time lag between the input operation and the appearance of the image can be reduced, and an unpleasant sensation is substantially not felt. Thus, the player can play the game comfortably.

FIG.1

**Description**

BACKGROUND OF THE INVENTION

1. Field of the Invention

The present invention relates to a game device, a game control method and a program.

2. Description of the Related Art

Conventionally, there is an example of a game device which shows an image of a "fighter" with "missiles" loaded and is shown on a display screen and an image that a "missile" is launched from its loaded position on the "fighter" against a target when a player depresses a button to shoot.

When the "missile" is launched, the "missile" in the loading position is immediately erased, and the flying "missile" is covered by another "missile" image. In other words, another model image "missile" is appeared in the loading position of the "fighter and moved toward the target. After a lapse of a prescribed time, a "missile" appears suddenly in the loading position so to be readily launched. Thus, it is observed that the "missile" is launched from the "fighter".

More specifically, processing is performed as follows.

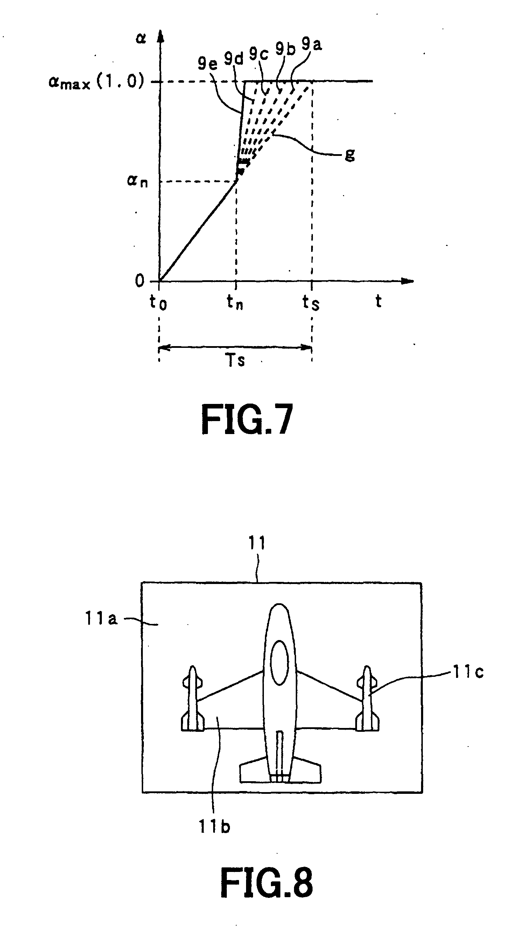

Fig. 8 shows a display screen 11 of the aforementioned game device. Sky is shown as a background image 11 a on the display screen 11, the "fighter" is shown as a master model image 11b superimposed on the "sky", and the "missiles" are shown as slave model images 11c at the loading positions of the "fighter". In other words, the slave model image 11c is created in a state attached to the master model image 11b.

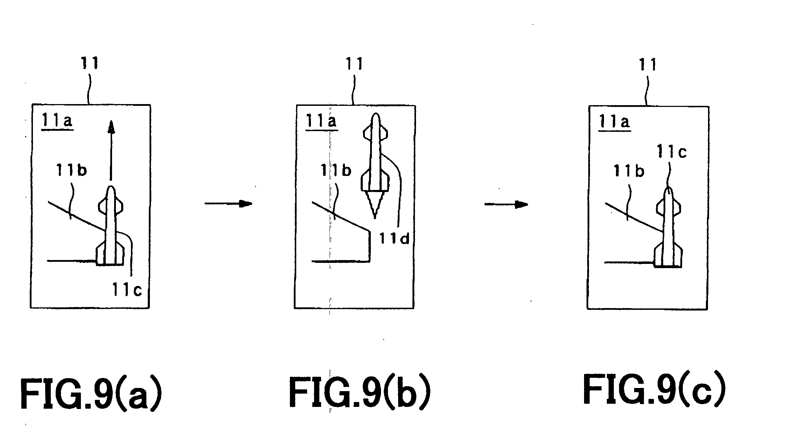

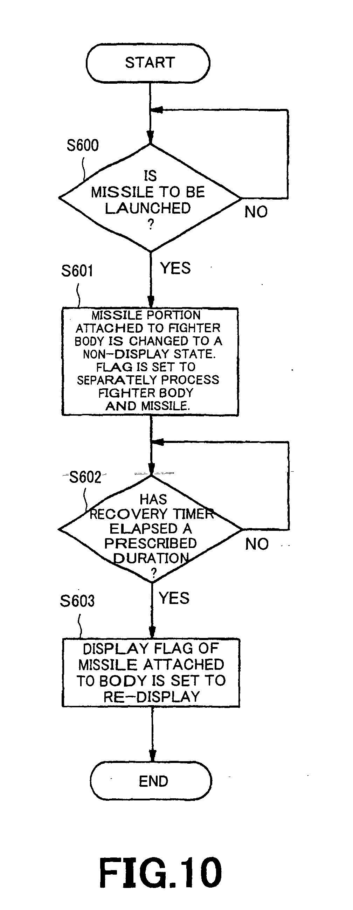

Here, processing of re-appearing the slave model image 11c on the background image 11 a will be described with reference to Figs. 9(a) to 9(c) and the flow chart shown in Fig. 10.

First, when the "missile" is ready to be launched as shown in Fig. 9(a), it is judged by the control section in the game device whether the player has depressed a button for launching the "missile" (S600). When the button is depressed, the "missile" is launched as shown in Fig. 9(b) (S601). When the "missile" is launched, a display flag indicating that the slave model image 11c is shown on the background image 11a is turned off, and the slave model image 11c is erased from the background image 11a.

At the same time, a separate processing flag indicating that the master model image 11b and the slave model image 11c are separately processed is turned on. Thus, separate from the "missile" as the slave model image 11c erased from the background image 11a, a "moving missile" is provided as a moving slave model image 11d which is processed so to be shown in a state moving on the background image 11a. In other words, the moving slave model image 11d is shown as a "moving missile" which moves on the background image 11a. And, positional coordinates of the master model image 11b as the "fighter" on the background image 11a and the moving slave model image 11d as the "moving missile" are separately processed by the control section in the game device. Meanwhile, a prescribed duration from the time when the slave model image 11c is erased from the background image 11 a to the time when the slave model image 11 c is appeared on the background image 11 a is counted by a timer.

Then, it is judged by the control section in the game device whether the aforementioned prescribed duration has elapsed (S602). When it is judged that the aforementioned prescribed time has elapsed, the "missile" appears suddenly in the loading position of the "fighter" on the display screen 11 (S603). In other words, a display flag for indicating that the slave model image 11c is shown on the background image 11a is turned on again. Thus, the slave model image 11c appears suddenly on the background image 11a and fully shown as shown in Fig. 9(c).

According to the game device which performs the processing shown in the flow chart of Fig. 10, it has a drawback in representation of the game because the player feels it not normal when the slave model image 11c, which is in the state not shown on the background image 11a, appears suddenly.

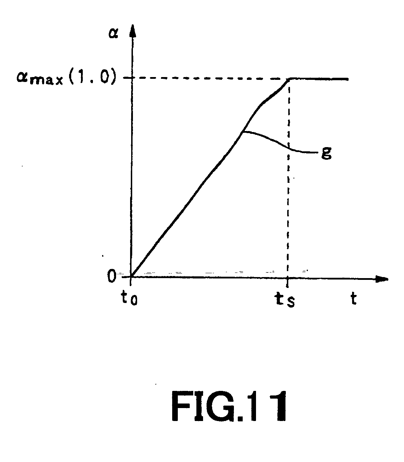

Therefore, there is used a game device which gradually shows the "missile" in the loading position of the "fighter", namely gradually shows the slave model image 11c with a lapse of time to fully show it. This game device will be described with reference to Fig. 11.

Fig. 11 is a graph g showing a relation between an elapsed time t after erasing the slave model image 11c and opacity $\alpha$ of the slave model image 11c, and the opacity $\alpha$ of the slave model image 11c increases sequentially and linearly until the slave model image 11c is changed from a non-display state to a fully displayed state. This relation is stored in the storage table within the game device. The opacity $\alpha$ of the slave model image 11c indicates a level that the slave model image 11c is shown on the background image 11a. For example, when the opacity $\alpha$ is 0, the slave model image 11c is in a non-shown state on the background image 11a. And when the opacity $\alpha$ is 0.5, the slave model image 11c is shown in a translucent state on the background image 11a. When the opacity $\alpha$ is 1.0, the slave model image 11c becomes in an opaque state on the background image 11a, and the slave model image 11c is fully shown. Actually, the opacity $\alpha$ of the slave model image 11c indicates a ratio of drawing elements extracted from image data on the slave model image 11c stored in the storage section within the game device.

According to the above conventional game device, the opacity $\alpha$ of the slave model image 11c increases as a ratio of drawing elements of the slave model image 11c increases sequentially and linearly at a prescribed increase rate with a lapse of time from a time t0 when the "missile" is launched, namely the time t0 when the slave model image 11c is erased. And, the slave model image 11c is fully shown in a display position at a time ts when the opacity $\alpha$ of the slave model image 11c becomes a maximum value 1.0 (a ratio occupied by the drawing elements of the slave model image 11c becomes 100%). Thus, the "missile" appears in the loading position.

However, the conventional game device cannot fully show the slave model image 11c in the display position unless a prescribed time has passed after the firing button is depressed.

Therefore, there are disadvantages that the player feels a stress because he or she has to wait for a prescribed time, and also feels an unpleasant sensation because the operation is not normal because when the button is depressed, the "missile" does not appear quickly in response to the depressing operation and there is a time lag between the button depressing operation and the appearance of the "missile".

SUMMARY OF THE INVENTION

The present invention has been achieved under the aforementioned circumstances, and it is an object of the invention to provide a game device, a game control method and a program, by which a game can be played without feeling a stress or an unpleasant sensation.

To remedy the aforementioned disadvantages, the game device according to the present invention is a game device having a function to show an image by sequentially increasing a ratio of drawing elements forming the image at a prescribed increase rate, which comprises operation input means used for input operation by a player and drawing element ratio increase means for increasing the ratio of drawing elements at an increase rate larger than the prescribed increase rate according to the input operation to the operation input means.

By configuring as described above, the ratio of drawing elements increases at an increase rate larger than the prescribed increase rate according to the input operation by the player, and the image can be shown more quickly compared with a case without the input operation. In other words, the image is shown in a prescribed time when no input operation is made, and the image can be shown earlier than the prescribed time when the input operation is performed, so that a time until the image is shown can be reduced as compared with the case without the input operation. Thus, the player does not feel a stress when the image is shown and can play the game comfortably. Since the display of the image can be accelerated according to the input operation, a time lag between the input operation and the appearance of the image can be reduced, and an unpleasant sensation is substantially not felt. Thus, the player can play the game comfortably.

As an embodiment of the present invention, the image is a projectile image which is loaded on a base image; the projectile image is configured such that after it is launched from a loaded position of the base image to a target and becomes a non-display state; a ratio of drawing elements forming the projectile image increases sequentially at a prescribed increase rate and the projectile image appears in the loading position; and when the player operates to launch while the projectile image is appearing, the drawing element ratio increase means increases the ratio of drawing elements of the projectile image at an increase rate larger than the prescribed increase rate.

By configuring as described above, the ratio of drawing elements of the projectile image increases at the increase rate higher than the prescribed increase rate according to the launching operation, and the projectile image can be shown with higher reality than a conventional game device. Because the display of the projectile image can be accelerated according to the launching operation, a time lag between the launching operation and the display of the projectile image can be reduced, and an unpleasant sensation is substantially not felt. In this connection, the projectile image can be shown in higher reality as compared with the conventional game device.

And, in an embodiment of the invention, the operation input means has an operation member which can be depressed for input operation by the player and outputs a pressure signal according to a pushing force applied to the operation member, and the drawing element ratio increase means increases the ratio of drawing elements at an increase rate larger than the prescribed increase rate according to a level of the pressure signal.

By configuring as described above, because the duration until the image is shown is variable depending on the magnitude of the depressing force applied to the operation member, the display of the image can be provided with a game property. And, when the depressing force applied to the operation member increases with a lapse of time, the display of the image is accelerated accordingly. Thus, the display of the image can be provided with a game property.

And, in an embodiment of the invention, pressure signal holding means is provided for holding a maximum value of a level of the output pressure signal.

Accordingly, even when the operation of the operation member is stopped in the process of displaying the image, the level of the pressure signal is maintained at the maximum value. Therefore, the ratio of drawing elements increased according to the level of the pressure signal is not reduced, and an increment of the ratio of drawing elements is maintained. Then, the ratio of drawing elements continues to increase at the prescribed rate of increase. The player does not feel a stress when the image is displayed and can play the game more comfortably.

And, an embodiment of the invention comprises increase rate storage means in which a plurality of increase rates which are larger than the prescribed increase rate are stored; and increase rate selection means for selecting one increase rate among the increase rates stored in the increase rate storage means according to the operation input, wherein the drawing element ratio increase means increases the ratio of drawing elements according to the increase rate selected by the increase rate selection means.

Accordingly, when the ratio of drawing elements of the image is increased, it is not necessary to calculate the ratio of drawing elements of the image, and the image display processing can be simplified. Because the image can be displayed more quickly by simplifying the image display processing, a time lag between the input operation and the image display can be reduced, and an unpleasant sensation is hardly felt. Therefore, the image can be shown with higher reality as compared with the conventional game device.

According to the present invention, the same function and effect as described above can be obtained not only by the aforementioned game device but also by a program for showing an image by sequentially increasing a ratio of drawing elements configuring the image at a prescribed increase rate by a computer, which is run on the computer to perform an operation input step for operation input by a player and a drawing element ratio increase step for increasing the ratio of drawing elements at an increase rate larger than the prescribed increase rate according to the operation input, and by a game control method for showing an image by sequentially increasing a ratio of drawing elements forming the image at a prescribed increase rate, which comprises an operation input step for input operation by a player and a drawing element ratio increase step for increasing the ratio of drawing elements at an increase rate larger than the prescribed increase rate according to the input operation.

BRIEF DESCRIPTION OF THE DRAWINGS

Fig. 1 is a diagram showing a hardware structure of the game device according to the present invention;
Fig. 2 is a function block diagram showing a structure of the game device according to the invention;
Figs. 3(a) and 3(b) are graphs showing a relation between an elapsed time after erasion of a slave model and opacity of the slave model according to the invention;
Figs. 4(a) to 4(d) are diagrams showing the changing states of ratios of extraction drawing elements of image data on the slave model;
Fig. 5 is a diagram showing another structure example of the game device according to the invention;
Fig. 6 is a flow chart showing a procedure of execution by a control section;
Fig. 7 is a graph showing another structure example of the invention;
Fig. 8 is a diagram showing a display example of the display screen of a display section;
Figs. 9(a) to 9(c) are diagrams showing a state that the slave model is re-shown on the background image;
Fig. 10 is a flow chart showing a procedure of processing performed by a related art; and
Fig. 11 is a graph of a related art showing a relation between an elapsed time after erasion of the slave model and opacity of the slave model.

DESCRIPTION OF THE PREFERRED EMBODIMENTS

A first embodiment of the game device according to the present invention will be described with reference to the accompanying drawings.

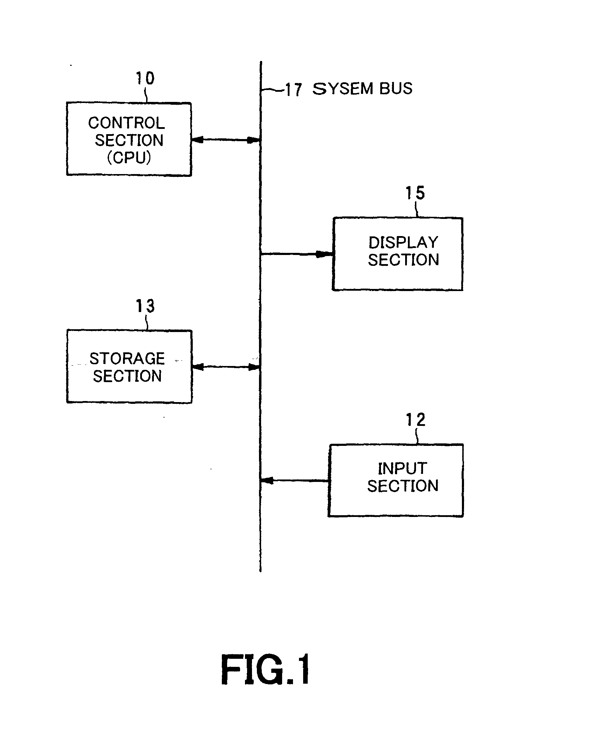

Fig. 1 shows a hardware structure of the game device according to the invention.

This game device controls to show images according to the operation input by the player.

In Fig. 1, an input section 12, a control section 10, a storage section 13 and a display section 15 are connected to a system bus 17.

The input section 12 is an input section which is operated when "missile" that is a slave model image 11c is launched and which comprises a joystick controller, a control pad having a variety of operation buttons, or the like, and outputs a signal according to the operation input by the player to the control section 10 through the system bus 17. The storage section 13 is comprised of a hard disk, a memory (RAM) and the like and stores image data. The control section 10 is comprised of a CPU (central processing unit) or the like which performs processing according to a control program such as an OS (operating system) or the like according to the signal output from the input section 12, reads the image data from the storage section 13 through the system bus 17 according to the control program and outputs to the display section 15. The display section 15 is comprised of a CRT (cathode ray tube), a liquid crystal (TFT, TFD, STN) or the like and shows images according to the image data read from the storage section 13.

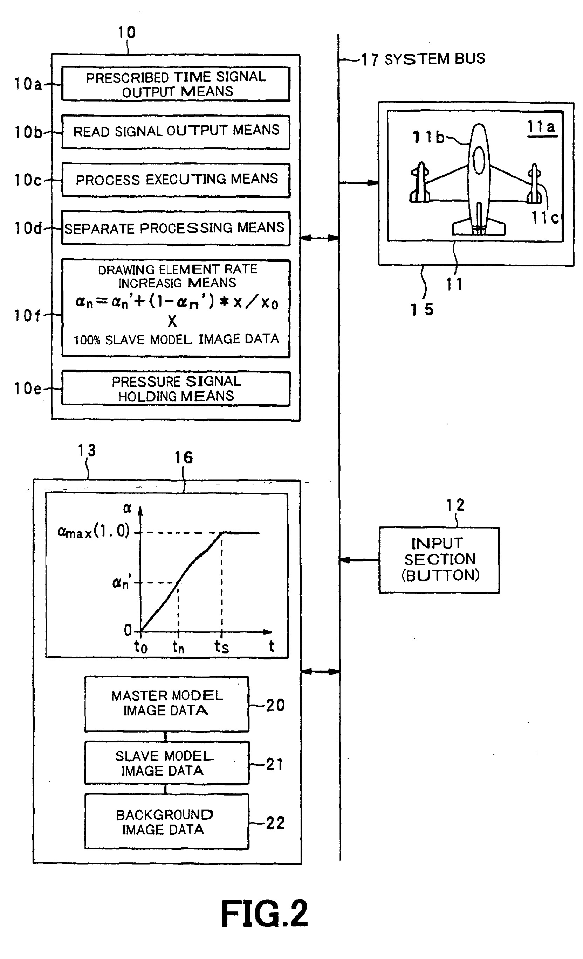

Fig. 2 is a function block diagram showing an example of the device structure which re-shows the slave model image 11c on the background image 11a shown on the display screen 11. In Fig. 2, the display screen 11 is the same as the display screen 11 of Fig. 8, and like reference numerals are allotted to like components as those of Fig. 1.

The input section 12 is a button disposed on the control pad. The button 12 outputs an analog input value according to a depressed operation pressure to the control section 10. The analog input value of the button 12 is variable between "1" and "65 535". As an example of the specific structure of the button 12, there can be used a pressure sensor having an operation member or the like, which can be depressed for operation by the player, to convert a pushing force applied to the operation member into a voltage, further convert the voltage into an analog input value and output it.

When the button 12 is configured as the pressure sensor, a time until the slave model image 11 c is displayed is variable depending on a magnitude of the pushing force applied to the operation member, and it becomes possible to provide the display of the slave model image 11c with a game property. The slave model image 11c can be displayed quicker as the pushing force applied to the operation member increases with time. Therefore, it becomes possible to provide the display of the slave model image 11c with the game property.

The storage section 13 stores a storage table 16, image data 20 of the master model image 11b, image data 21 of the slave model image 11c, and image data 22 of the background image 11 a. Such image data 20, 21, 22 have a hierarchical structure. Specifically, the image data 21 is at a higher level of the image data 22, and the image data 20 is at a higher level of the image data 21.

A display flag indicating that the slave model image 11 c is shown on the background image 11 a is determined in correspondence with a layer where the image data on the slave model image 11c is present. And, the processing to show the slave model image 11c on the background image 11a is performed by tracing the hierarchy of the image data.

Therefore, the aforementioned display flag is prepared by tracing from the layer where the image data on the background image 11 is present to the layer where the image data on the slave model image 11c is present.

The master model image 11b and the slave model image 11c are shown as 3D polygon models on the display screen 11.

The storage table 16 stores the graph shown in Fig. 11 which shows that the opacity α of the slave model image 11c is increased sequentially and linearly until the slave model image 11c changes from the non-display state to the full display state.

The display section 15 shows the master model image ("fighter") 11b, the slave model image ("missile") 11c and the background image ("sky") 11a on the display screen 11 depending on the processed result by the control section 10. In other words, the master model image 11b is a substrate, and the slave model image 11c is a projectile.

The control section 10 is provided with prescribed time signal output means 10a, read signal output means 10b, processing execution means 10c, separate processing means 10d, pressure signal holding means 10e, and drawing element ratio increase means 10f.

The various kinds of data stored in the storage section 13 and the various means functioning in the control section 10 are not limited to be previously provided but may also include those expanded by reading a program recorded on, for example, a storage medium such as a CD-ROM.

Here, the prescribed time signal output means 10a measures an elapsed time from the time t0 when the button 12 is depressed by the player to launch the slave model image ("missile") 11c and outputs a prescribed time signal, which indicates that the elapsed time has become prescribed time Ts or more, to the processing execution means 10c. The read signal output means 10b output a read signal to the storage table 16 according to the time tn when the player has depressed the button 12. The processing execution means 10c cause the drawing element ratio increasing means 10f to perform processing to change a ratio of extraction drawing elements of the image data 21 on the slave model image 11c until a prescribed time signal is input. The separate processing means 10d provide a "moving missile" as the moving slave model image 11d, which is processed so to be shown in a state moving on the background image 11 a, separate from the "missile" as the slave model image 11c and also processes positional coordinates of the master model image 11b as the "fighter" and the master model image 11b as the "moving missile".

The pressure signal holding means 10e hold the analog input value at the maximum level so that the level of the pressure signal, namely an analog input value, does not decrease even when the player releases the button 12 to pause the depressing operation. Even when the operation of the button 12 is stopped during the process of displaying the slave model image 11c, the analog input value is held at the maximum value by the pressure signal holding means 10e, so that the increment of the ratio of the drawing elements is kept maintained without lowering the ratio of drawing elements which was increased according to the analog input value. Then, the ratio of drawing elements continues to increase at a prescribed rate of increase. Thus, the player can play the game more comfortably without feeling a stress when the image is displayed.

When the player does not depress the button 12 within a prescribed time Ts from the time t0 when the button 12 is depressed to launch the slave model image ("missile") 11c, the drawing element ratio increase means 10f sequentially read from the storage table 16 the opacity α according to the elapsed time t from the time t0 and multiply the image data 21 of the slave model image 11c and the opacity α to increase a ratio of extraction drawing elements of the image data 21 on the slave model image 11c. And, analog input value x0 is input to the read signal output means 10b according to the depressing operation of the button 12 at time tn, and the read signal output means 10b output the read signal to the storage table 16. Here, in the drawing element ratio increase means 10f, the below mathematical expression:

$$\alpha n = an' + (1-\alpha n')*x/x0 \qquad (1)$$

is previously set to show the opacity $\alpha n$ at the time tn in view of opacity $\alpha n'$, input analog value x and predetermined analog input value x0 (* denotes operator of multiplication). Accordingly, when the drawing element ratio increase means 10f read the opacity $\alpha n'$ of the slave model image 11c corresponding to the time tn from the storage table 16, the drawing element ratio increase means 10f read the image data 21 on the slave model image 11c stored in the storage section 13 and multiply the read image data 21 and the opacity $\alpha n$ determined by the aforementioned expression (1) to change a ratio of the extraction drawing elements of the image data 21 on the slave model image 11c. And, when a prescribed time signal is input to the processing execution means 10c, the drawing element ratio increase means 10f read opacity $\alpha$max of the slave model image 11c corresponding to the time ts, read the image data 21 on the slave model image 11c stored in the storage section 13, and multiply the image data 21 on the slave model image 11c and the opacity $\alpha$max of the slave model image 11c, to make the ratio of extraction drawing elements of the image data 21 on the slave model image 11c to 100%.

The drawing element ratio increase means 10f also process to make a ratio of extraction drawing elements of the image data on the "moving missile" as the moving model image 11d which is provided by the separate processing means 10d to 100%. When the pressure signal holding means 10e maintain the analog input value at the maximum value, the increment of the ratio of extraction drawing elements is maintained without reducing the ratio of extraction drawing elements increased according to the analog input value, and then the ratio of extraction drawing elements continues to increase at a rate of increase before the operation to depress the button 12.

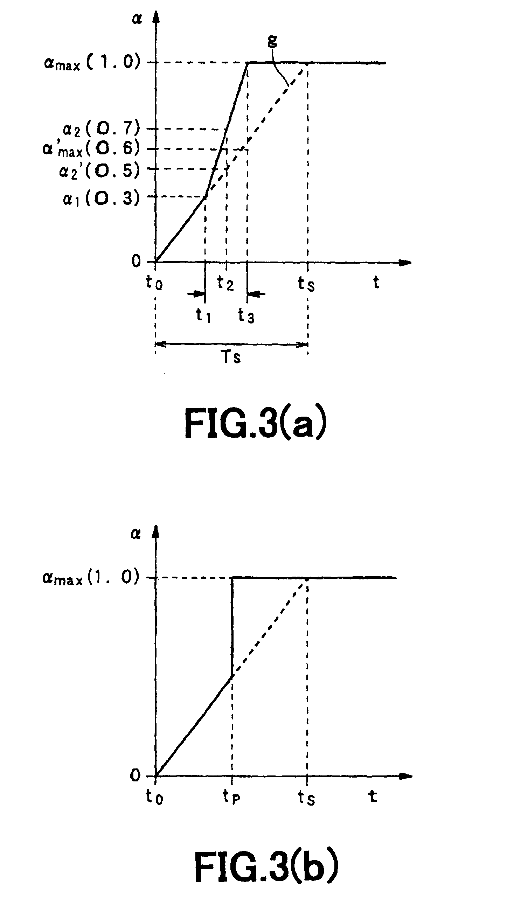

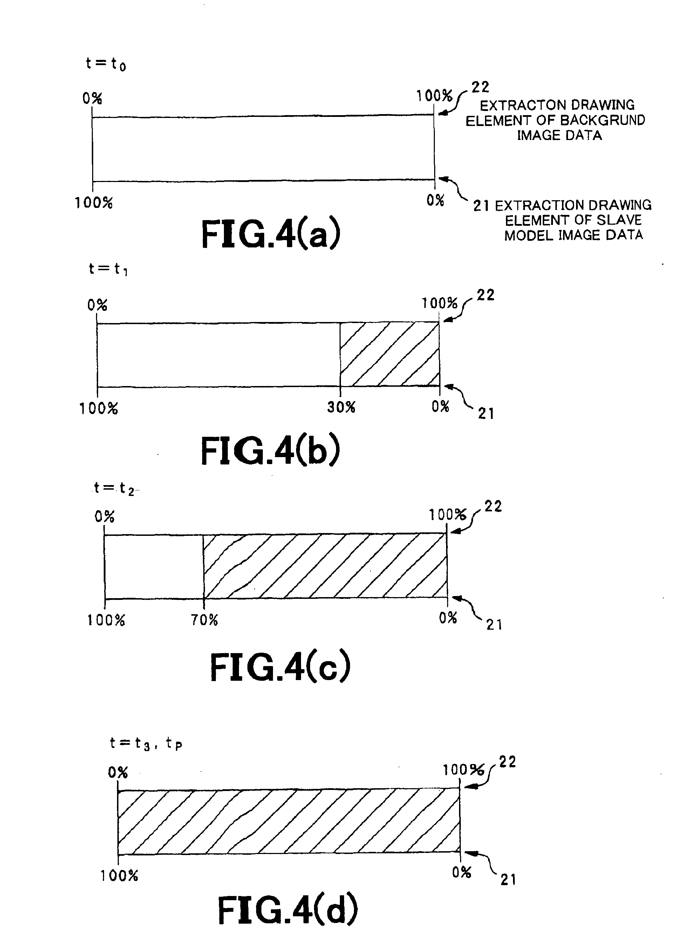

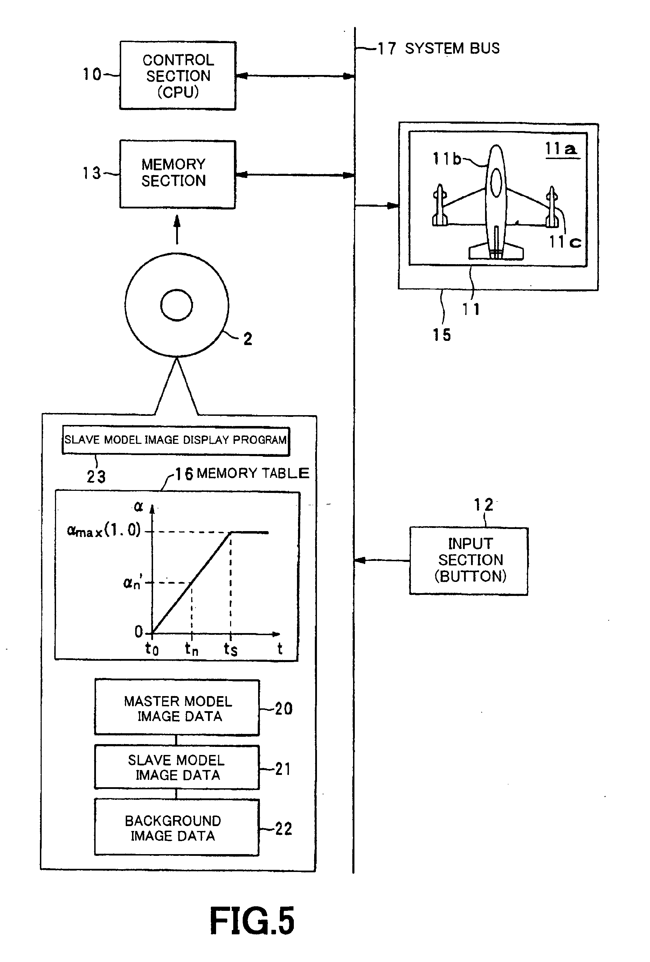

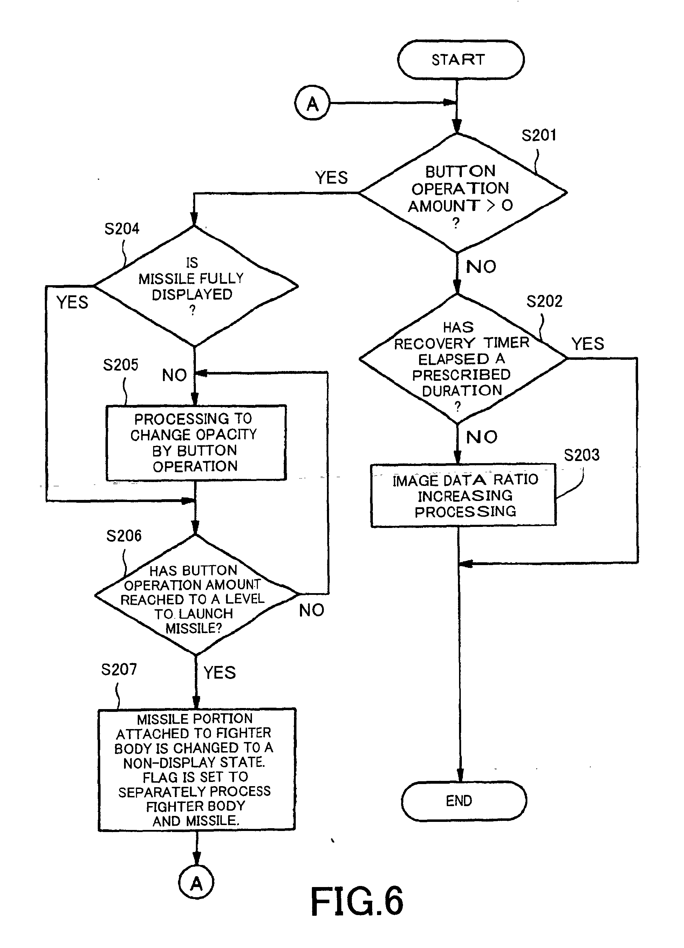

Then, an operation of the game device of Fig. 2 will be described with reference to Figs. 3, 4, 6. Figs. 3(a), (b) show a relation between the elapsed time t after erasion of the slave model image 11 c and the opacity $\alpha$ of the slave model image 11c. Graphs g shown in Figs. 3(a), (b) have the same horizontal axis and vertical axis as those of the graph g shown in Fig. 11. Here, Fig. 3(a) shows that the opacity $\alpha$ of the slave model image 11c is changed according to a pressure of depressing the button 12 when the player depresses the button 12 within the prescribed time Ts. Fig. 3(b) shows that the opacity $\alpha$ of the slave model image 11c is set to the maximum value 1.0 at the time tp when the button 12 is depressed by the player within the prescribed time Ts. Figs. 4(a), (b), (c), (d) show a state that a ratio occupied by the image data 21 in the areas of the image data 21, 22 changes. And, Fig. 6 is a flow chart showing a procedure executed by the control section 10 of Fig. 5.

Description will be made on control to change the opacity $\alpha$ of the slave model image 11c according to the force of depressing the button 12, namely to increase the ratio of extraction drawing elements of the image data when the player depresses the button 12 within the prescribed time Ts, namely when the player operates to launch the "missile" when it is being loaded.

First, the player depresses the button 12 to launch the "missile", and the slave model image 11c is erased from the background image 11a. And, the prescribed time signal output means 10a count an elapsed time from the time t0 when the slave model image 11c is erased from the background image 11a by the player as shown in Fig. 3(a).

Here, when the player does not depress the button 12 within the prescribed time Ts and the elapsed time does not become the prescribed time Ts or more, the drawing element ratio increase means 10f sequentially read the opacity $\alpha$ depending on time t from the storage table 16 and multiply the image data 21 on the slave model image 11c and the opacity $\alpha$ to increase the ratio of extraction drawing elements of the image data 21 on the slave model image 11c (S203 of Fig. 6).

And, when the ratio of extraction drawing elements of the image data 21 on the slave model image 11c becomes 100%, the slave model image 11c is fully shown on the background image 11a, namely the "missile" appears in the loading position.

Meanwhile, when the player does not depress the button 12 within the prescribed time Ts and the elapsed time becomes the prescribed time Ts or more, the prescribed time signal output means 10a output the prescribed time signal to the processing execution means 10c.

Thus, the processing execution means 10c cause the drawing element ratio increase means 10f to adjust the ratio of extraction drawing elements of the image data 21 on the slave model image 11c to 100% and to fully show the slave model image 11c on the background image 11 a, namely to appear the "missile" in the loading position.

Here, the player depresses the button 12 at the time tn within the prescribed time TS, but the depressing pressure (analog input value) of the button 12 does not reach a level to load the "missile" in the loading position, namely it does not reach a level to fully show the slave model image 11c. Then, the drawing element ratio increase means 10f increase the opacity $\alpha$ of the slave model image 11c, namely a ratio of extraction drawing elements of the image data, according to the depressing force to the button 12, namely the analog input value of the button 12 (S205).

Specifically, the opacity $\alpha$ of the slave model image 11c is 0 at the time t0 as shown in Fig. 3(a). When it is assumed that the hollow portion in the extraction drawing element region of the image data 21, 22 shown in Fig. 4(a) is the extraction drawing element region of the image data 22 of the background image 11 a, a ratio occupied by the extraction drawing elements of the image data 21 on the slave model image 11c is 0%. In other words, the slave model image 11c becomes completely transparent and is not shown on the background image 11a.

When it is assumed that the button 12 is started to be depressed at time t1 after a lapse of time from the time t0 as shown in Fig. 3(a), the opacity $\alpha$ of the slave model image 11c at the time t1 is 0.3. Specifically, when it is assumed that the diagonally shaded area in the region of the extraction drawing elements of the image data 12, 22 shown in Fig. 4(b) is an area of the extraction drawing elements of the image data 21 on the slave model image 11c, a ratio occupied by the extraction drawing elements of the image data 21 on the slave model image 11c becomes 30%.

The drawing element ratio increase means 10f sequentially read the opacity $\alpha$ of the slave model image 11c from the storage table 16 from the time t0 to the time t1 and also read the image data 21 on the slave model image 11c stored in the storage section 13, and multiply the image data 21 and the opacity $\alpha$ to gradually show the slave model image 11c on the background image 11a of the display screen 11.

The drawing element ratio increase means 10f sequentially read the opacity $\alpha$ of the slave model image 11c corresponding to the time elapsed from the time tl from the storage table 16.

Thus, using the opacity $\alpha$ at the time t on the graph g, the analog input value x of the button 12 at the time t, the value x0 to fully show the slave model image 11c, and the aforementioned expression (1), the drawing element ratio increase means 10f sequentially determine the opacity $\alpha$ at the time t when the button 12 is depressed by the player.

The drawing element ratio increase means 10f read the image data 21 on the slave model image 11c stored in the storage section 13 and multiply the image data 21 and the opacity $\alpha$ calculated by the above expression (1) to increase the ratio of extraction drawing elements of the image data 21 on the slave model image 11c to 100%.

Here, a change in the ratio of the extraction drawing elements of the image data 21 on the slave model image 11c will be described with reference to elapsed times t2, t3.

For example, when the elapsed time becomes t2, it is assumed that opacity $\alpha2'$ on the graph g at the time t2 is 0.5, an analog input value x of the button 12 at the time t2 is "24000", and a value x0 to fully show the slave model image 11s is "60000", and the aforementioned expression (1) is used, and the drawing element ratio increase means 10f calculate the opacity $\alpha2$ = 0.7 at time t2 when the button 12 is depressed. And, the drawing element ratio increase means 10f multiply the opacity $\alpha2$ = 0.7 and the image data 21 of the slave model image 11c to increase the ratio of extraction drawing elements of the image data 21 on the slave model image 11c to 70%.

Specifically, the drawing element ratio increase means 10f increase the ratio occupied by the extraction drawing elements of the image data 21 in the diagonally shaded area in the region of the image data 21, 22 shown in Fig. 4(c) to 70%.

After the time t2, the drawing element ratio increase means 10f perform the same control as above according to the depressing operation to increase the ratio occupied by the extraction drawing elements of the image data 21 on the slave model image 11c.

Furthermore, at the time t3 when the depressing operation is completed, it is assumed that opacity $\alpha\max'$ on the graph g is 0.6, the analog input value x of the button 12 at the time t3 is "60000", and the value x to fully show the slave model image 11c is "60000", and the above expression (1) is used, and the drawing element ratio increase means 10f calculate the opacity $\alpha\max$ = 1.0. And, the drawing element ratio increase means 10f multiply the opacity $\alpha\max$ = 1.0 and the image data 21 on the slave model image 11c to increase the ratio of extraction drawing elements of the image data 21 on the slave model image 11c to 100%.

Specifically, the ratio occupied by the extraction drawing elements of the image data 21 on the slave model image 11c in the diagonally shaded area in the region of the image data 21, 22 shown in Fig. 4(d) becomes 100%.

When the button 12 is depressed within the prescribed time Ts, namely while the "missile" is being loaded, the opacity $\alpha$ of the slave model image 11c ("missile") is immediately adjusted to the maximum value $\alpha\max$ = 1.0. In other words, the ratio of extraction drawing elements of the image data 21 on the slave model image 11c may be adjusted to 100%.

To make the above control, it is necessary to provide options in advance for the drawing element ratio increase means 10f before the player plays the game.

For example, when it is assumed that the button 12 is depressed by the player at the time tp of Fig. 3(b), the drawing element ratio increase means 10f determine the opacity $\alpha$ of the slave model image 11c at the time tp to the maximum value amax = 1.0. Specifically, the drawing element ratio increase means 10f determine the ratio occupied by the extraction drawing elements of the image data 21 in the diagonally shaded area in the region of the image data 21, 22 to 100% as shown in Fig. 4(d).

Thus, the drawing element ratio increase means 1 0f set the opacity $\alpha$ of the slave model image 11c to the maximum value 1.0 according to the depressing force to the button 12, namely the analog input value of the button 12. Thus, the slave model image 11c is fully shown, and the "missile" reaches the state loaded in the loading position.

Then, the separate processing means 10d turn off the display flag which indicates that the slave model image 11c is shown on the background image 11a and also the drawing element ratio increase means 10f erase the slave model image 11c from the background image 11a, namely adjust the ratio of extraction drawing elements of the image data 21 on the slave model image 10c to 0%. At the same time, the separate processing means 10d turn on the separate processing flag which indicates that the master model image 11b and the slave model image 11c are separately processed (S207). Thus, the separate processing means 10d provide a "moving missile" separate from the "missile" as the slave model image 11c which is erased from the background image 11a. Here, the drawing element ratio increase means 10f show the moving slave model image 11d as the "moving missile" which moves on the background image 11a by adjusting the ratio of extraction drawing elements of the image data to 100%. And, the separate processing means 10d separately process positional coordinates of the master model image 11b as the "fighter" and the master model image 11b as the "moving missile" on the background image 11 a.

When the launching operation is performed during the ordinary loading operation of the "missile", the ratio of extraction drawing elements of the image data on the "missile" is increased, according to an operation amount per unit time of the button 12, to be larger than the ratio before the launching operation during the loading operation, and the "missile" appears quickly in the loading position. Specifically, when the launching operation is performed within the prescribed time Ts, the ratio of extraction drawing elements of the image data 21 on the slave model image 11 c is increased according to the operated amount, and the slave model image 11c is fully shown in the display position.

As described above, according to the first embodiment, the ratio of drawing elements is increased at a rate of increase larger than the prescribed rate of increase according to the depressing force to the button 12 by the player, so that the slave model image 11c can be shown more quickly than in the case not performing the input operation. In other words, when the depressing operational input is not performed, the slave model image 11c is shown after the prescribed time Ts, and when the depressing operational input is performed, the slave model image 11c can be shown before the prescribed time Ts, so that the time before the display of the slave model image 11c can be decreased as compared with the case that the depressing operational input is not performed. Thus, the player can play the game comfortably without feeling a stress when the slave model image 11c is shown.

According to the first embodiment, the display of the image can be accelerated according to the depressing operational input, so that a time lag between the depressing operational input and the display of the slave model image 11c can be decreased, and an unpleasant sensation is substantially not felt, so that the player can play the game comfortably.

And, according to the first embodiment, the ratio of the drawing elements of the "missile" image increases at a rate of increase larger than the prescribed rate of increase according to the launching operation by the player, so that the "missile" image can be shown with higher reality as compared with the conventional game device.

And, because the display of the "missile" image can be accelerated according to the launching operation by the player, a time lag between the launching operation and the display of the "missile" image can be decreased, and an unpleasant sensation is substantially not felt. Thus, the "missile" image can be shown with higher reality as compared with the conventional game device.

Then, the second embodiment of the invention will be described with reference to Fig. 5. It is to be understood that like reference numerals are used in Fig. 5 to indicate like components as those used in the first embodiment, and their description will be omitted or simplified.

In the second embodiment, the slave model image display program, which describes the aforementioned prescribed time signal output means 10a, read signal output means 10b, processing execution means 10c, separate processing means 10d, pressure signal holding means 10e and drawing element ratio increase means 10f as a prescribed time signal output step, a read signal output step, a processing execution step, a separate processing step, a separate signal holding step and a drawing element ratio increase step, the storage table 16, the image data 20, 21, 22 are stored on a storage medium.

Fig. 5 shows an example of the game device which has a slave model image display program 23, the storage table 16, the image data 20, 21, 22 stored on the storage medium 2.

As the storage medium 2, there can be used various types of portable storage media such as a CD-ROM, a magnetic disk, a magneto-optic disk, a game cartridge, a floppy (registered trade mark) disk or the like.

Here, the slave model image display program 23, the storage table 16, the image data 20, 21, 22 stored on the storage medium 2 are written on the storage section 13. Then, the control section 10 activates the control program to read the slave model image display program 23 which is written in the storage section 13 to execute the various processing in the prescribed time signal output step, the read signal output step, the processing execution step, the separate processing step, the pressure signal holding step, and the drawing element ratio increase step.

Then, the operation of the game device of Fig. 5 will be described with reference to Fig. 6.

Here, description will be made on processing that when the player depresses the button 12 within the prescribed time Ts, namely when the player performs the launching operation during the loading operation of the "missile", the opacity $\alpha$ of the slave model image 11c is changed according to the depressing force to the button 12, namely the ratio of extraction drawing elements of the image data is changed.

First, the player depresses the button 12 to launch the "missile", and the slave model image 11c is erased from the background image 11a. And, an elapsed time from the time t0 when the slave model image 11c is erased from the background image 11a is counted in the prescribed time signal output step as shown in Fig. 3(a). And, the drawing element ratio increase step sequentially reads the opacity $\alpha$ from the storage table 16 depending on the time t and multiplies the image data 21 of the slave model image 11c and the opacity $\alpha$ to increase the ratio of extraction drawing elements of the image data 21 on the slave model image 11c.

Then, it is judged in the read signal output step whether the button 12 is depressed within the prescribed time Ts (S201).

When it is judged in the read signal output step that the button is not depressed within the prescribed time Ts, it is judged in the processing execution step whether the elapsed time has become the prescribed time Ts or more (S202).

When it is judged in the processing execution step that the elapsed time has not become the prescribed time Ts or more (judged No in S202), the drawing element ratio increase step sequentially reads the opacity $\alpha$ from the storage table 16 according to the time t and multiplies the image data 21 on the slave model image 11c and the opacity $\alpha$ to increase the ratio of extraction drawing elements of the image data 21 on the slave model image 11c. And, when the ratio of the extraction drawing elements of the image data 21 on the slave model image 11c becomes 100%, the drawing element ratio increase step causes to fully appear the slave model image 11c on the background image 11a, namely causes to appear the "missile" at the mounting position (S203).

And, when it is judged in the processing execution step that the elapsed time has become the prescribed time Ts or more (judged No in S202), it is decided to fully show the slave model image 11c at the time ts. Thus, the time ts is detected in the read signal output step, and the read signal indicating the time ts is output to the storage table 16. Accordingly, the drawing element ratio increase step reads the opacity $\alpha max = 1.0$ from the storage table 16, multiplies the image data 21 on the slave model image 11c and the opacity $\alpha max = 1.0$ to make the ratio of extraction drawing elements of the image data 21 on the slave model image 11c to 100%, and fully shows the slave model image 11c on the background image 11 a. In other words, the "missile" is appeared in the loading position.

When it is judged in the read signal output step that the depressing operation of the button 12 by the player is detected, the drawing element ratio increase step judges whether the depressing force to the button 12 (analog input value) has reached a state that the "missile" is loaded in the loading position (complete display state of the slave model image 11c) (S204). When it is judged in the drawing element ratio increase step that the slave model image 11c is not fully shown, the opacity $\alpha$ of the slave model image 11c, namely the ratio of extraction drawing elements of the image data is increased according to the depressing force to the button 12, namely the analog input value of the button 12 in the drawing element ratio increase step as shown in Fig. 3 and Fig. 4 (S205).

Thus, when the opacity $\alpha$ of the slave model image 11c is set to the maximum value of 1.0 according to the depressing force to the button 12, namely the analog input value of the button 12, the drawing element ratio increase step judges whether the depressing pressure (analog input value) to the button 12 has reached the state (fully showing state of the slave model image 11c) of loading the "missile" in the loading position (S206).

When it is judged in the drawing element ratio increase step that the slave model image 11c is fully shown, the separate processing step turns off the display flag which indicates that the slave model image 11c is shown on the background image 11a, and the drawing element ratio increase step erases the slave model image 11c from the background image 11a. In other words, the ratio of the extraction drawing elements of the image data 21 on the slave model image 11c is set to 0%. At the same time, the separate processing step turns on the separate processing flag which indicates that the master model image 11b and the slave model image 11c are separately processed (S207). Thus, the separate processing step provides a "moving missile" separately from the "missile" as the slave model image 11c erased from the background image 11a. Here, the ratio of extraction drawing elements of the image data is set to 100% in the drawing element ratio increase step to indicate the moving slave model image 11d as the "moving missile" which moves on the background image 11a. And, the separate processing step separately processes positional coordinates of the master model image 11 b as the "fighter" on the background image 11a and the master model image 11b as the "moving missile". Then, the procedure is returned to S201 again.

When the launching operation is performed during the ordinary loading operation of the "missile" as described above, the ratio of extraction drawing elements of the image data on the "missile" is increased to a level higher than the ratio before the launching operation during the loading operation depending on the operated amount per unit time of the button 12, and the "missile" is quickly shown in the loading position. Namely, when the launching operation is performed within the prescribed time Ts, the ratio of extraction drawing elements of the image data 21 on the slave model image 11c is increased depending on the operated amount, and the slave model image 11c is fully shown in the display position.

According to the second embodiment, the same action and effect as in the first embodiment can be obtained.

In the first and second embodiments, the ratio of extraction drawing elements of the image data 21 on the slave model image 11c is increased according to the depressing pressure to the button 12, but the present invention may increase the ratio of extraction drawing elements of the image data 21 on the slave model image 11c according to the moved amount of the button 12 owing to the depressing operation. Namely, instead of input of the analog input value corresponding to the depressing pressure to the button 12 to the control section 10, the analog input value corresponding to the moved amount of the depressed button 12 may be input to the control section 10. As a specific structure of the button 12 in this case, it may be a displacement sensor or the like, which has an operation member which can be depressed for the input operation, contacts a terminal fitted to the operation member to a resistor, slides it in a direction of the depressing operation to convert the depressing operation displaced amount of the button 12 into a voltage produced between the above terminal and one terminal of the resistor, and converts the voltage into an analog input value and outputs it.

By configuring the button 12 as a displacement sensor, a time until the slave model image 11c is shown is variable according to a level of the displacement amount of the operation member, so that the display of the slave model image 11c can be provided with a game property And, when the displacement amount of the operation member increases with time, the slave model image 11c is displayed more quickly, and the slave model image 11 c can be displayed with a game property.

And, a displacement amount signal holding means may be provided to hold the maximum value of a level of the analog input value to be output from the displacement sensor, namely the displacement amount signal.

By virtue of the displacement amount signal holding means, the analog input value is kept at the maximum value even when the operation of the button 12 is stopped in the process of showing the slave model image 11c. Therefore, the increment of the ratio of drawing elements is maintained as it is without decreasing the ratio of drawing elements increased according to the analog input value, and the ratio of the drawing elements continues to increase at a prescribed rate of increase. Thus, the player can play the game more comfortably without feeling a stress when the image is displayed.

The first and second embodiments show the "fighter" and "missiles" on the display screen 11 but may show other characters such as "persons" and "monsters".

The first and second embodiments may detect a rate of increase of the opacity $\alpha$ of the slave model image 11c per unit time t when the button 12 is depressed at the time tn within the prescribed time Ts as shown in Fig. 7, have the control section 10 provided with increase rate storage means which store increase rates 9a, 9b, 9c, 9d, 9e larger than the increase rate of the graph g before the depressing operation at the time tn and increase rate selection means which select one increase rate from the increase rates 9a, 9b, 9c, 9d, 9e stored in the increase rate storage means according to the detected increase rate of the opacity $\alpha$ of the slave model image 11c, and increase the ratio of drawing elements by the drawing element ratio increase means 10f according to the increase rate selected by the increase rate selection means.

Thus, it is not necessary to calculate the ratio of drawing elements of the slave model image 11c when the ratio of drawing elements of the slave model image 11c is increased, and the display processing of the slave model image 11c can be simplified. The display of the slave model image 11c can be made quickly because the display processing of the slave model image 11 c is simplified, a time lag between the depressing input operation of the button 12 and the display of the slave model image 11c can be reduced, and the player hardly feels an unpleasant sensation. Therefore, the slave model image 11c can be shown with higher reality compared with the conventional game device.

The aforementioned increase rate storage means and the increase rate selection means may be determined as programs written as processing such as an increase rate storage step and an increase rate selection step and stored in the storage medium 2.

And, the first and second embodiments increase sequentially and linearly the extraction drawing elements of the "missile" until the "missile" is changed from the non-display state to the full display state, but the present invention may increase the extraction drawing elements along the curve, namely may increase at a desired increase rate.

As described above, the present invention provides an effect that the game can be played comfortably without feeling a stress or an unpleasant sensation.

**Claims**

1. A game device having a function to show an image by sequentially increasing a ratio of drawing elements forming the image at a prescribed increase rate, comprising:

   operation input means used for input operation by a player; and
   drawing element ratio increase means for increasing the ratio of drawing elements at an increase rate larger than the prescribed increase rate according to the input operation to the operation input means.

2. The game device according to claim 1, wherein:

the image is a projectile image which is loaded on a base image, the projectile image being configured such that after it is launched from a loaded position of the base image to a target and becomes a non-display state, a ratio of drawing elements forming the projectile image increases sequentially at a prescribed increase rate and the projectile image appears in the loading position; and
when the player operates to launch while the projectile image is appearing, the drawing element ratio increase means increases the ratio of drawing elements of the projectile image at an increase rate larger than the prescribed increase rate.

3. The game device according to claim 1 or 2, wherein:

the operation input means has an operation member which can be depressed for input operation by the player and outputs a pressure signal according to a pushing force applied to the operation member; and
the drawing element ratio increase means increases the ratio of drawing elements at an increase rate larger than the prescribed increase rate according to a level of the pressure signal.

4. The game device according to claim 3, further comprising pressure signal holding means for holding a maximum value of a level of the output pressure signal.

5. The game device according to any one of claims 1 to 4, further comprising:

increase rate storage means in which a plurality of increase rates which are larger than the prescribed increase rate are stored; and
increase rate selection means for selecting one increase rate among the increase rates stored in the increase rate storage means according to the operation input; wherein:

the drawing element ratio increase means increases the ratio of drawing elements according to the increase rate selected by the increase rate selection means.

6. A program for showing an image by sequentially increasing a ratio of drawing elements configuring the image at a prescribed increase rate by a computer, wherein:

the program is run on the computer to perform:

an operation input step for operation input by a player; and
a drawing element ratio increase step for increasing the ratio of drawing elements at an increase rate larger than the prescribed increase rate according to the operation input.

7. The program according to claim 6, wherein:

the image is a projectile image which is loaded on a base image, the projectile image being configured such that after it is launched from a loaded position of the base image to a target and becomes a non-display state, a ratio of drawing elements forming the projectile image increases sequentially at a prescribed increase rate and the projectile image appears in the loading position; and
when the player operates to launch while the projectile image is appearing, the program is run on the computer to perform the drawing element ratio increase step to increase the ratio of drawing elements of the projectile image at an increase rate larger than the prescribed increase rate.

8. The program according to claim 6 and 7, wherein:

the program is run on the computer to perform:

the operation input step, which outputs a pressure signal according to a pushing force applied to the operation member which can be depressed for input operation by the player; and
the drawing element ratio increase step, which increases the ratio of drawing elements at an increase rate larger than the prescribed increase rate according to a level of the pressure signal.

9. The program according to claim 8, wherein the program is run on the computer to perform:

a pressure signal holding step which holds a maximum value of a level of the output pressure signal.

10. The program according to any one of claims 6 to 9, comprising:

an increase rate storage step, which stores a plurality of increase rates which are larger than the prescribed increase rate; and
an increase rate selection step, which selects one increase rate among the increase rates stored in the increase rate storage step according to the operation input; wherein:

the program is run on the computer to perform:

the drawing element ratio increase step, which increases the ratio of drawing elements according to the increase rate selected by the increase rate selection step.

**11.** A game control method for showing an image by sequentially increasing a ratio of drawing elements forming the image at a prescribed increase rate, comprising:

an operation input step for input operation by a player; and
a drawing element ratio increase step, which increases the ratio of drawing elements at an increase rate larger than the prescribed increase rate according to the input operation.

**12.** The game control method according to claim 11, wherein:

the image is a projectile image which is loaded on a base image, the projectile image being configured such that after it is launched from a loaded position of the base image to a target and becomes a non-display state, a ratio of drawing elements forming the projectile image increases sequentially at a prescribed increase rate and the projectile image appears in the loading position; and
when the player operates to launch while the projectile image is appearing, the drawing element ratio increase step increases the ratio of drawing elements of the projectile image at an increase rate larger than the prescribed increase rate.

**13.** The game control method according to claim 11 or 12, wherein:

the operation input step outputs a pressure signal according to a pushing force applied to an operation member which can be depressed for input operation by the player; and
the drawing element ratio increase step increases the ratio of drawing elements at an increase rate larger than the prescribed increase rate according to a level of the pressure signal.

**14.** The game control method according to claim 13, further comprising a pressure signal holding step which holds a maximum value of a level of the output pressure signal.

**15.** The game control method according to any one of claims 11 to 14, further comprising:

an increase rate storage step, which stores a plurality of increase rates which are larger than the prescribed increase rate; and
an increase rate selection step, which selects one increase rate among the increase rates stored in the increase rate storage step according to the operation input; wherein:

the drawing element ratio increase step increases the ratio of drawing elements according to the increase rate selected in the increase rate selection step.

10

CONTROL
SECTION
(CPU)

17 SYSEM BUS

15

DISPLAY
SECTION

13

STORAGE
SECTION

12

INPUT
SECTION

# FIG.1

**10**

| | |
|---|---|
| 10a | PRESCRIBED TIME SIGNAL OUTPUT MEANS |
| 10b | READ SIGNAL OUTPUT MEANS |
| 10c | PROCESS EXECUTING MEANS |
| 10d | SEPARATE PROCESSING MEANS |
| 10f | DRAWING ELEMENT RATE INCREASIG MEANS $\alpha_n = \alpha_n' + (1 - \alpha_n') * x / x_0$ X 100% SLAVE MODEL IMAGE DATA |
| 10e | PRESSURE SIGNAL HOLDING MEANS |

17 SYSTEM BUS

11a
11b
11c
11
15

12
INPUT SECTION (BUTTON)

13 16

MASTER MODEL IMAGE DATA — 20

SLAVE MODEL IMAGE DATA — 21

BACKGROUND IMAGE DATA — 22

# FIG.2

14

FIG.3(a)

FIG.3(b)

$t = t_0$

FIG.4(a)

22 EXTRACTON DRAWING ELEMENT OF BACKGRUND IMAGE DATA

21 EXTRACTION DRAWING ELEMENT OF SLAVE MODEL IMAGE DATA

$t = t_1$

FIG.4(b)

$t = t_2$

FIG.4(c)

$t = t_3, t_P$

FIG.4(d)

16

17 SYSTEM BUS

CONTROL
SECTION
(CPU)

10

MEMORY
SECTION

13

2

11b

11a

11c

11

15

SLAVE MODEL IMAGE DISPLAY PROGRAM

23

16 MEMORY TABLE

$\alpha$

$\alpha_{max}(1.0)$

$\alpha_n'$

0   $t_0$   $t_n$   $t_S$   $t$

12

INPUT
SECTION
(BUTTON)

MASTER MODEL
IMAGE DATA

20

SLAVE MODEL
IMAGE DATA

21

BACKGROUND
IMAGE DATA

22

# FIG.5

START

(A)

S201

BUTTON
OPERATION
AMOUNT > 0
?

YES

S204

IS
MISSILE FULLY
DISPLAYED
?

YES

NO

S205

PROCESSING TO
CHANGE OPACITY
BY BUTTON
OPERATION

NO

S202

HAS
RECOVERY TIMER
ELAPSED A
PRESCRIBED
DURATION
?

YES

NO

S203

IMAGE DATA RATIO
INCREASING
PROCESSING

S206

HAS BUTTON
OPERATION AMOUNT
REACHED TO A LEVEL
TO LAUNCH
MISSILE?

NO

YES

S207

MISSILE PORTION
ATTACHED TO FIGHTER
BODY IS CHANGED TO A
NON-DISPLAY STATE.
FLAG IS SET TO
SEPARATELY PROCESS
FIGHTER BODY
AND MISSILE.

END

(A)

FIG.6

18

FIG.7

FIG.8

**FIG.9(a)**　　**FIG.9(b)**　　**FIG.9(c)**

START

S600

IS
MISSILE TO BE
LAUNCHED
?

NO

YES

S601

MISSILE PORTION
ATTACHED TO FIGHTER
BODY IS CHANGED TO A
NON−DISPLAY STATE.
FLAG IS SET TO
SEPARATELY PROCESS
FIGHTER BODY
AND MISSILE.

S602

HAS
RECOVERY TIMER
ELAPSED A
PRESCRIBED
DURATION
?

NO

YES

S603

DISPLAY FLAG OF
MISSILE ATTACHED
TO BODY IS SET TO
RE−DISPLAY

END

# FIG.10

# FIG.11